# EUROPEAN PATENT APPLICATION

(11) **EP 4 424 858 A1**
(43) Date of publication of application: **04.09.2024**
(21) Application number: 22886940.0
(22) Date of filing: 24.10.2022
(51) Int. Cl.: C22C 30/00, C22C 19/05, C22C 38/00, C22C 38/54, B23K 35/30, B33Y 80/00, B33Y 70/00, B22F 10/20, B22F 10/25, B22F 10/28, B22F 1/00, C22C 1/04

(54) **NI ALLOY POWDER SUITED TO ADDITIVE MANUFACTURING AND ADDITIVELY MANUFACTURED ARTICLE OBTAINED USING SAME**

(30) Priority: 25.10.2021 JP 2021174187; 14.10.2022 JP 2022165787
(71) Applicant: Sanyo Special Steel Co., Ltd., Himeji-shi, Hyogo 672-8677 (JP)
(72) Inventor: MIURA Yuka, Himeji-shi, Hyogo 672-8677 (JP); HAGIYA Toru, Himeji-shi, Hyogo 672-8677 (JP); MAEDA Soichiro, Himeji-shi, Hyogo 672-8677 (JP); AIKAWA Yoshikazu, Himeji-shi, Hyogo 672-8677 (JP)
(74) Representative: Müller-Boré & Partner Patentanwälte PartG mbB
(86) International application number: PCT/JP2022/039500
(87) International publication number: WO 2023/074613

(57) **Abstract**

An object of the present invention is to provide an Ni-based alloy powder having excellent high-temperature strength and cracking resistance, which is suitable for additive manufacturing, and the present invention provides an Ni-based alloy powder consisting of, in mass% :
Ni: 40.00% to 70.00%;
Cr: 15.00% to 25.00%;
Mo: 0.10% to 12.00%;
Nb: 3.00% to 7.00%;
Al: 0.10% to 1.50%;
Ti: 0.10% to 2.00%;
Si: 0.01% to 0.40%;
C: 0.001% to 0.15%;
B: 0.0002% to 0.0040%;
S: 0% to 0.002%;
one or more of W and Co: 0% to 7.00% in total; and
the balance consisting of Fe and inevitable impurities,
wherein a value of strength parameter A1 is 200 or more, and a value of cracking resistance parameter A2 is 200 or less.

## Description

### FIELD OF THE INVENTION

The present invention relates to an Ni-based alloy powder suitable for additive manufacturing and an additively manufactured article obtained using the same.

### BACKGROUND ART

3D printers are beginning to be used for creating shaped articles made of metals. 3D printers create shaped articles using an additive manufacturing method. Typical additive manufacturing methods include a powder bed method (powder bed fusion method) and a metal deposition method (directed energy deposition method).

In the metal deposition method, shaped layers are stacked by repeating the step of supplying a melted powder to a predetermined position and solidifying it to form a shaped layer. A melted powder can be formed by directly melting the powder by melting the flying powder that is injected toward the base material or the powder that adheres to the surface of the base material with a laser beam, or by indirectly melting the powder by injecting the powder onto the melted base material surface.

In the powder bed method, irradiation with a laser beam or an electron beam melts and solidifies the irradiated portion of the spread powder. The melting and solidification cause the powder particles to bond together. The irradiation is selectively applied to a portion of the metal powder, and the portion that is not irradiated is not melted, and a bonding layer is formed only in the irradiated portion.

A new metal powder is further spread over the formed bonding layer, and the metal powder is irradiated with a laser beam or an electron beam. The irradiation then melts and solidifies the metal particles, forming a new bonding layer. The new bonding layer is also bonded to the existing bonding layer.

An aggregate of bonding layers gradually grows by sequentially repeating melting and solidification by irradiation. Through this growth, a shaped article having a three-dimensional shape is obtained. When such an additive manufacturing method is used, a shaped article having a complicated shape can be easily obtained.

The method suggested as the powder bed additive manufacturing method is, for example, a method for producing a shaped article having a three-dimensional shape comprising forming a sintered layer by repeating a powder layer forming step of forming a powder layer using a powder that is a mixture of an iron-based powder and one or more types of powder selected from the group consisting of nickel, a nickel-based alloy, copper, a copper-based alloy, and graphite as a metal powder for metal stereolithography, a sintered layer forming step of irradiating the powder layer with a beam to form a sintered layer, and a removal step of cutting the surface of the shaped article (see Patent Literature 1).

One of the powders used in an additive manufacturing method is an Ni-based superalloy powder. As disclosed in Patent Literature 2, since an Ni-based superalloys has excellent heat resistance by adding Ti, Al, and the like and precipitating intermetallic compounds through heat treatment, they are used in the form of cast or forged materials for applications such as engine parts materials in the space and aircraft industries. However, since an Ni-based superalloy has poor workability, the application of selective laser sintering, which allows the production of near-net-shape parts, is being promoted.

### CITATION LIST

### PATENT LITERATURE

Patent Literature 1: Japanese Unexamined Patent Publication No. 2008-81840
Patent Literature 2: WO 2011/149101

### SUMMARY OF THE INVENTION

### TECHNICAL PROBLEM

Cracks may not occur when an Ni-based alloy part is made into a base material using a general casting or forging process. However, when a part is shaped using an additive manufacturing method with an Ni-based alloy powder, cracks tend to occur inside the part in a rapid-melting and rapid-cooling-for-solidification process of the additive manufacturing method. This is because concentration due to segregation of impurity components occurs during solidification, and a liquid phase is formed in a portion, which causes shrinkage during resolidification, thereby resulting in cracks.

As described above, when a manufacturing method involving a rapid-melting and rapid-cooling-for-solidification process, such as an additive manufacturing method, is applied to an Ni-based alloy powder, an intermetallic compound having a high alloy composition is precipitated. Although the precipitation of an intermetallic compound contributes to improving heat resistance, it causes minute cracks inside and reduces density and strength, which is problematic.

For example, in the case of an Ni-based alloy containing Nb for precipitation strengthening, the melt remains at a low temperature due to the γ/Laves eutectic or the γ/NbC eutectic; thus, the presence of the low melting point melt helps to expand the brittle temperature range (BTR), thereby resulting in strain due to solidification shrinkage. Solidification cracking, which is a cause of easy cracking in an additively manufactured article obtained by an additive manufacturing method using an Ni-based alloy powder, is more likely to occur due to the effects of such strain. Hereinafter, a eutectic structure consisting of a γ phase and a Laves phase is referred to as a "γ/Laves eutectic," and a eutectic structure consisting of a γ phase and an NbC phase is referred to as a "γ/NbC eutectic."

In an Ni-based alloy, Nb is a useful component for precipitation strengthening due to the γ" phase (gamma double prime phase), and C is a necessary component for grain boundary strengthening. Therefore, reducing these components excessively makes obtaining the necessary high-temperature strength impossible.

An object of the present invention is to provide an Ni-based alloy powder having cracking resistance and high-temperature strength, which is suitable for additive manufacturing, and an additively manufactured article obtained using the same.

### SOLUTION TO PROBLEM

As a result of intensive studies, the present inventors found, as an Ni-based alloy powder that can achieve both cracking resistance and high-temperature strength, an Ni-based alloy powder satisfying A1 ≥ 200 and A2 ≤ 200, wherein A1 is a strength parameter and A2 is a cracking resistance parameter.

A first aspect of the present invention relates to an Ni-based alloy powder consisting of, in mass%:
Ni: 40.00% to 70.00%;
Cr: 15.00% to 25.00%;
Mo: 0.10% to 12.00%;
Nb: 3.00% to 7.00%;
Al: 0.10% to 1.50%;
Ti: 0.10% to 2.00%;
Si: 0.01% to 0.40%;
C: 0.001% to 0.15%;
B: 0.0002% to 0.0040%;
S: 0% to 0.002%;
one or more of W and Co: 0% to 7.00% in total; and
the balance consisting of Fe and inevitable impurities,
wherein
a value of A1 defined by the following formula is 200 or more: A1 = 5.1[C] + 0.3[Cr] + 3.5[Mo] + 2.9[W] + 0.4[Co] + 19.0[Nb] + 9.4[Al] + 33.0[Ti] + 120.1[B] + 48.8
wherein [C], [Cr], [Mo], [W], [Co], [Nb], [Al], [Ti], and [B] represent contents of C, Cr, Mo, W, Co, Nb, Al, Ti, and B (mass%) in the Ni-based alloy powder, respectively, and
a value of A2 defined by the following formula is 200 or less: A2 = 270.4[C] + 0.5[Cr] + 0.6[Mo] + 0.3[W] + 0.1[Co] + 10.0[Nb] + 30.5[Al] + 15.8[Ti] + 2009.1[B] + 4094.3[S] +62.1
wherein [C], [Cr], [Mo], [W], [Co], [Nb], [Al], [Ti], [B], and [S] represent contents of C, Cr, Mo, W, Co, Nb, Al, Ti, B, and S (mass%) in the Ni-based alloy powder, respectively.

A second aspect of the present invention relates to an additively manufactured article obtained using the Ni-based alloy powder according to the first aspect of the present invention.

### ADVANTAGEOUS EFFECTS OF INVENTION

An additively manufactured article having high-temperature strength, in which solidification cracking due to the γ/Laves eutectic or γ/NbC eutectic is suppressed, can be obtained by additive manufacturing using the Ni-based alloy powder of the present invention.

### BRIEF DESCRIPTION OF THE DRAWING

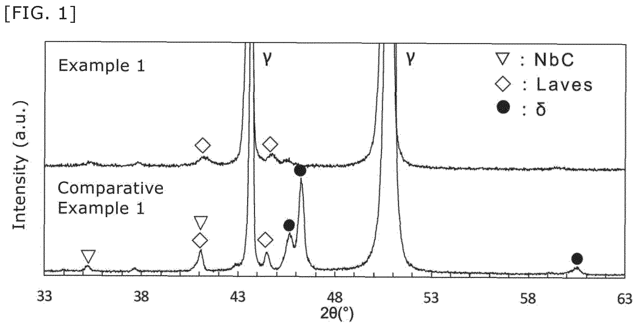

FIG. 1 is a diagram showing X-ray diffraction (XRD) patterns of additively manufactured articles obtained using the alloy powders of Example 1 and Comparative Example 1.

### DETAILED DESCRIPTION OF THE INVENTION

### <<Ni-based Alloy Powder> >

The first aspect of the present invention relates to an Ni-based alloy powder. Hereinafter, the reasons for specifying the component composition of the Ni-based alloy powder according to the first aspect of the present invention and the values of parameters A1 and A2 will be described. Note that "%" used for the component composition of the Ni-based alloy powder refers to "mass%" and that "A% to B%" refers to A% or more and B% or less.

### Ni: 40.00% to 70.00%

Ni is a component that contributes to corrosion resistance. In particular, Ni contributes to corrosion resistance at high temperatures in an acidic environment and an environment containing chlorine ions. From such viewpoints, the Ni content in the Ni-based alloy powder is set to 40.00% or more. Meanwhile, from the viewpoint of stability of the austenite phase and interaction with other elements, such as Cr, the Ni content in the Ni-based alloy powder is set to 70.00% or less. The Ni content in the Ni-based alloy powder is preferably 45.00% to 69.00%, more preferably 48.00% to 68.00%, still more preferably 50.00% to 67.00%, even still more preferably 52.00% to 66.00%.

### Cr: 15.00% to 25.00%

Cr is an element that contributes to the solid solution strengthening of the alloy and the improvement of oxidation resistance of the alloy when used at high temperatures. When the Cr content in the Ni-based alloy powder is less than 15.00%, the above-described effects cannot be sufficiently obtained. Meanwhile, when the Cr content in the Ni-based alloy powder exceeds 25.00%, the δ phase is generated, thereby resulting in decreased high-temperature strength and toughness. Therefore, the Cr content in the Ni-based alloy powder is set to 15.00% to 25.00%. The Cr content in the Ni-based alloy powder is preferably 16.00% to 24.00%, more preferably 17.00% to 24.00%, still more preferably 18.00% to 23.00%, even still more preferably 19.00% to 23.00%.

### Mo: 0.10% to 12.00%

Mo is an element that contributes to solid solution strengthening and is effective in increasing strength. Thus, the Mo content in the Ni-based alloy powder is set to 0.10% or more. However, when the Mo content is excessively high, it promotes the generation of the µ phase or σ phase, thereby impairing the toughness of the shaped article, which may cause embrittlement. Thus, the Mo content in the Ni-based alloy powder is set to 12.00% or less. The Mo content in the Ni-based alloy powder is preferably 1.00% to 11.50%, more preferably 2.00% to 11.00%, still more preferably 3.00% to 10.50%.

### Nb: 3.00 to 7.00%

Since Nb is a component that forms a carbide and the γ" phase to improve strength, the Nb content in the Ni-based alloy powder is set to 3.00% or more. However, when the Nb content is excessively high, the amount of the Laves phase generated increases; thus, the γ/Laves eutectic is generated, facilitating cracking. Therefore, the Nb content in the Ni-based alloy powder is set to 7.00% or less.

### Al: 0.10% to 1.50%

Since Al is an element that forms the γ' phase (gamma prime phase) and improves creep rupture strength and oxidation resistance, the Al content in the Ni-based alloy powder is set to 0.10% or more. However, when the Al content in the Ni-based alloy powder exceeds 1.50%, high-temperature cracking tends to occur; thus, cracking tends to occur during additive manufacturing. Therefore, the Al content in the Ni-based alloy powder is set to 1.50% or less. The Al content in the Ni-based alloy powder is preferably 0.20% to 1.40%.

### Ti: 0.10% to 2.00%

Since Ti is an element that forms the γ' phase and improves creep rupture strength and oxidation resistance, as in Al, the Ti content in the Ni-based alloy powder is set to 0.10% or more. However, when the Ti content in the Ni-based alloy powder exceeds 2.00%, high-temperature cracking tends to occur; thus, cracking tends to occur during additive manufacturing. Therefore, the Ti content in the Ni-based alloy powder is set to 2.00% or less. The Ti content in the Ni-based alloy powder is preferably 0.20% to 1.90%, more preferably 0.30% to 1.80%.

### Si: 0.01% to 0.40%

Since Si is an element that acts as a deoxidizer during melting and provides oxidation resistance at high temperatures, the Si content in the Ni-based alloy powder is 0.01% or more. However, when an excessively large amount of Si is added, oxidation resistance deteriorates at high temperatures. Therefore, the Si content in the Ni-based alloy powder is set to 0.40% or less. The Si content in the Ni-based alloy powder is preferably 0.05% to 0.40%.

### C: 0.001% to 0.15%

C is an element that not only forms an MC type carbide with Nb, Ti, and the like, but also forms a carbide such as M₆C, M₇C₃, or M₂₃C₆ with Cr, Mo, W, and the like, and has the effect of increasing the high-temperature strength of an alloy. Therefore, the C content in the Ni-based alloy powder is set to 0.001% or more. However, when the C content is excessively high, a γ/NbC eutectic is generated, thereby facilitating cracking. Therefore, the C content in the Ni-based alloy powder is set to 0.15% or less. The C content in the Ni-based alloy powder is preferably 0.01% to 0.14%, more preferably 0.02% to 0.14%, still more preferably 0.03% to 0.13%, still more preferably 0.04% to 0.12%.

### B: 0.0002% to 0.0040%

B is a component that has the effect of strengthening grain boundaries and improving strength. Therefore, the B content in the Ni-based alloy powder is set to 0.0002% or more. However, an excessively large amount of B facilitates the concentration of an Nb compound (Laves or NbC) in the final solidification part of welding. Therefore, the B content in the Ni-based alloy powder is 0.0040% or less. The B content in the Ni-based alloy powder is preferably 0.0003% to 0.0035%, more preferably 0.0004% to 0.0030%.

### S: 0% to 0.002%

S facilitates cracking during sintering in a rapid-melting and rapid-cooling-for-solidification process by producing a low melting point liquid phase during solidification. Therefore, the S content in the Ni-based alloy powder is set to 0.002% or less. Solidification cracking can be suppressed by controlling the content of S that forms a liquid phase with a low melting point during solidification and is likely to cause solidification cracking to be 0.002% or less. The S content in the Ni-based alloy powder may be 0% or more than 0%. When the S content is more than 0%, the S content is, for example, 0.001% or more.

### One or more of W and Co: 0% to 7.00% in total

The Ni-based alloy powder can contain either W or Co or both W and Co.

W contributes to solid solution strengthening; however, excessive W impairs the toughness and strength of the shaped article.

Co increases the solubility of the γ' phase in the Ni solid solution. Therefore, Co is a component that can increase the high-temperature ductility and high-temperature strength of an additively manufactured article. However, excessive Co impairs the toughness and strength of the shaped article.

Therefore, from the viewpoint of toughness and strength, the total content of W and Co in the Ni-based alloy powder is set to 7.00% or less. The total content of W and Co in the Ni-based alloy powder is preferably 6.90% or less, more preferably 6.80% or less, still more preferably 6.70% or less, even still more preferably 6.60% or less. The total content of W and Co may be 0% or more than 0%. When the total content of W and Co is more than 0%, the content of W and Co is, for example, 1.00% or more.

### Balance: Fe and Inevitable Impurities

The balance of the Ni-based alloy powder according to the first aspect of the present invention consists of Fe and inevitable impurities. Since Fe is an element that effectively reduces costs by replacing Ni, the balance of the Ni-based alloy powder according to the first aspect of the present invention consists of Fe and inevitable impurities.

### Values of A1 and A2

The Ni-based alloy powder according to the first aspect of the present invention can achieve both high-temperature strength and cracking resistance as long as the values of both A1 and A2 satisfy the range according to the present invention. In the case where only one of them is satisfied, for example, a condition that either high-temperature strength or cracking resistance is not satisfied can be included. Therefore, the values of both A1 and A2 are set to satisfy specified values. The meanings of the values of A1 and A2 are as follows.

### Value of A1: 200 or more

The value of A1 is defined by the following formula: A1 = 5.1[C] + 0.3[Cr] + 3.5[Mo] + 2.9[W] + 0.4[Co] + 19.0[Nb] + 9.4[Al] + 33.0[Ti] + 120.1[B] + 48.8 wherein [C], [Cr], [Mo], [W], [Co], [Nb], [Al], [Ti], and [B] represent contents of C, Cr, Mo, W, Co, Nb, Al, Ti, and B (mass%) in the Ni-based alloy powder according to the first aspect of the present invention, respectively.

A1 is a strength parameter. When the value of A1 is 200 or more, high-temperature strength is sufficiently ensured.

### Value of A2: 200 or less

The value of A2 is defined by the following formula: A2 = 270.4[C] + 0.5[Cr] + 0.6[Mo] + 0.3[W] + 0.1[Co] + 10.0[Nb] + 30.5[Al] + 15.8[Ti] + 2009.1[B] + 4094.3[S] + 62.1 wherein [C], [Cr], [Mo], [W], [Co], [Nb], [Al], [Ti], [B], and [S] represent contents of C, Cr, Mo, W, Co, Nb, Al, Ti, B, and S (mass%) in the Ni-based alloy powder according to the first aspect of the present invention, respectively.

A2 is a cracking resistance parameter. When the value of A2 is 200 or less, the number of cracks is suppressed.

The average particle size (D₅₀) of the Ni-based alloy powder according to the first aspect of the present invention is preferably 10 µm to 100 µm. When D₅₀ is less than 10 µm, micronization reduces the fluidity of the powder. Meanwhile, when D₅₀ is more than 100 µm, the filling rate decreases; thus, the density of an additively manufactured article obtained by an additive manufacturing method using the Ni-based alloy powder according to the first aspect of the present invention decreases. D₅₀ of the Ni-based alloy powder according to the first aspect of the present invention is more preferably 20 µm to 95 µm, still more preferably 30 µm to 90 µm, even still more preferably 40 µm to 85 µm, yet still more preferably 50 µm to 85 µm, yet still more preferably 60 µm to 85 µm.

D₅₀ (µm) is the particle size at the point where the cumulative volume is 50% in a volume-based cumulative frequency distribution curve determined with the total volume of the powder as 100%. D₅₀ is measured by a laser diffraction scattering method. It is measured using an apparatus suitable for this measurement, for example, NIKKISO CO., LTD.'s laser diffraction/scattering particle size distribution measuring apparatus, "Microtrac MT3000." The powder is poured into a cell of this apparatus together with pure water, and the particle size is detected based on the light scattering information of the particles.

Hereinafter, the production of the Ni-based alloy powder according to the first aspect of the present invention will be described.

Examples of the method for producing an Ni-based alloy powder include a water atomization method, a single-roll quenching method, a twin-roll quenching method, a gas atomization method, a disc atomization method, and a centrifugal atomization method. Of these, preferable examples of the method for producing an Ni-based alloy powder are the single-roll quenching method, gas atomization method, and disc atomization method. Further, to produce an Ni-based alloy powder, a powder can also be obtained by pulverization using mechanical milling or the like. Examples of the milling method include a ball mill method, a bead mill method, a planetary ball mill method, an attritor method, and a vibrating ball mill method.

From the viewpoint of spheroidization, a gas atomization method is particularly preferable as the method for producing an Ni-based alloy powder used in an additive manufacturing method. Therefore, in Examples below, an alloy powder obtained by production with gas atomization is used.

### <<Additively Manufactured Article>>

The second aspect of the present invention relates to an additively manufactured article obtained using the Ni-based alloy powder according to the first aspect of the present invention.

The additively manufactured article according to the second aspect of the present invention is a shaped article obtained by an additive manufacturing method using the Ni-based alloy powder according to the first aspect of the present invention. The additive manufacturing method includes a rapid-melting and rapid-cooling-for-solidification process. The rapid-melting and rapid-cooling-for-solidification process is a process of rapid melting and rapid solidification of the Ni-based alloy powder according to the first aspect of the present invention. According to the additive manufacturing method using the Ni-based alloy powder according to the first aspect of the present invention, solidification cracking that may occur in the rapid-melting and rapid-cooling-for-solidification process of the additive manufacturing method can be suppressed. This allows for suppressing the decreased density and/or strength of an additively manufactured article. In other words, according to the additive manufacturing method using the Ni-based alloy powder of the first aspect of the present invention, it is possible to obtain an additively manufactured article showing a high level of high-temperature strength while suppressing solidification cracking. Typical additive manufacturing methods include a powder bed method (powder bed fusion method) and a metal deposition method (directed energy deposition method). A laser or electron beam is generally used in a powder bed method. A laser beam is generally used in a metal deposition method. The additive manufacturing method can be performed using, for example, a 3D printer. Preferably, a powder material for shaping used in the additive manufacturing method consists of the Ni-based alloy powder according to the first aspect of the present invention; however, it may contain a material(s) other than the Ni-based alloy powder according to the first aspect of the present invention. The powder material for shaping may contain, for example, a powder binder (e.g., resin powder).

Preferably, the additively manufactured article according to the second aspect of the present invention consists of an Ni-based alloy having a composition substantially identical to that of the Ni-based alloy powder according to the first aspect of the present invention. Preferably, the composition of the Ni-based alloy that constitutes the additively manufactured article according to the second aspect of the present invention is the same as the composition of the Ni-based alloy powder according to the first aspect of the present invention within an analytical error. The description of the composition of the Ni-based alloy powder according to the first aspect of the present invention also applies to the composition of the Ni-based alloy that constitutes the additively manufactured article according to the second aspect of the present invention.

The relative density of the additively manufactured article according to the second aspect of the present invention is preferably 95% or more, more preferably 96% or more, still more preferably 97% or more, even still more preferably 98% or more, yet still more preferably 99% or more. The relative density of the additively manufactured article can be improved by preventing the occurrence of solidification cracking that may occur in the rapid-melting and rapid-cooling-for-solidification process of the additive manufacturing method. The relative density of the additively manufactured article is measured as follows. The density (g/mm³) of an additively manufactured article or a test piece cut from the additively manufactured article is calculated using the weight in air and weight in water of the additively manufactured article or test piece and the density of water (Archimedean densitometry). In Archimedean densitometry, the density of the test piece is calculated by dividing the weight of the additively manufactured article or test piece in air by the volume of the test piece (= weight of test piece in water/density of water at a measurement temperature). The density (g/mm³) of the powder used in the production of the additively manufactured article is calculated by dry density measurement using a constant volume expansion method (gas used: helium gas; equipment used: Micromeritics AccuPyc1330 manufactured by SHIMADZU CORPORATION). The relative density of the additively manufactured article (%) is calculated from the density of the additively manufactured article or test piece and the density of the powder based on the following formula: Relative density of additively manufactured article (%) = Density of additively manufactured article or test piece/Density of powder × 100.

The tensile strength of the additively manufactured article according to the second aspect of the present invention is preferably 930 MPa or more, more preferably 940 MPa or more, still more preferably 950 MPa or more, even still more preferably 960 MPa or more. The upper limit of the tensile strength is not particularly limited; however, it is, for example, 1500 MPa or less, 1400 MPa or less, 1300 MPa or less, or 1200 MPa or less. Each of these lower limits may be combined with any of the upper limits described above. The tensile strength of the additively manufactured article is measured by the method described in the Examples.

### EXAM PLES

Powder materials satisfying the component compositions and the values of A1 and A2 shown in Table 1 were obtained as alloy powders by a gas atomization method in Example Nos. 1 to 8 and Comparative Example Nos. 9 to 14. Each alloy powder was classified such that the particle size was 150 µm or less, and the alloy powder was used as a test material. In the gas atomization method, raw materials were melted in predetermined proportions in an alumina crucible in a vacuum using high-frequency induction heating; the melted alloy was dropped from a nozzle having a diameter of 5 mm under the crucible, and then high-pressure argon or high-pressure nitrogen was sprayed to the alloy.

### [Table 1]

**Table 1**

| | No. | C | Ni | Cr | Mo | W | Co | Nb | Al | Ti | Si | B | S | Fe | A1 | A2 |
|---|---|---|---|---|---|---|---|---|---|---|---|---|---|---|---|---|
| Example | 1 | 0.05 | 52.40 | 19.21 | 3.12 | - | - | 5.23 | 0.51 | 1.01 | 0.11 | 0.0015 | 0.002 | Bal. | 203.4 | 182.2 |
| | 2 | 0.11 | 63.94 | 20.51 | 9.03 | 2.05 | - | 3.70 | 0.87 | 1.20 | 0.15 | 0.0009 | 0.001 | Bal. | 211.2 | 196.5 |
| | 3 | 0.04 | 55.71 | 19.42 | 8.67 | - | 1.18 | 6.70 | 0.62 | 0.78 | 0.05 | 0.0004 | 0.002 | Bal. | 244.5 | 195.2 |
| | 4 | 0.12 | 57.49 | 21.44 | 7.80 | - | - | 3.10 | 0.70 | 1.72 | 0.08 | 0.0016 | 0.001 | Bal. | 205.6 | 196.8 |
| | 5 | 0.04 | 65.13 | 22.69 | 7.99 | 0.10 | 6.50 | 4.90 | 0.61 | 0.99 | 0.37 | 0.0029 | 0.002 | Bal. | 218.5 | 187.0 |
| | 6 | 0.05 | 55.68 | 21.04 | 6.88 | 5.90 | 0.30 | 3.90 | 1.37 | 0.80 | 0.06 | 0.0007 | 0.001 | Bal. | 210.1 | 191.0 |
| | 7 | 0.11 | 64.51 | 20.83 | 7.76 | 3.00 | 2.90 | 4.90 | 0.69 | 0.37 | 0.09 | 0.0011 | 0.002 | Bal. | 204.5 | 194.4 |
| | 8 | 0.11 | 59.45 | 22.38 | 10.02 | 2.10 | 4.30 | 5.25 | 0.20 | 0.92 | 0.08 | 0.0013 | 0.001 | Bal. | 231.2 | 190.0 |
| Comparative Example | 9 | 0.04 | 52.10 | 19.21 | 3.23 | - | - | 2.80 | 0.42 | 0.99 | 0.32 | 0.0037 | 0.002 | Bal. | 156.3 | 156.5 |
| | 10 | 0.13 | 62.15 | 20.80 | 7.33 | 2.11 | - | 4.40 | 1.46 | 1.11 | 0.28 | 0.0031 | 0.004 | Bal. | 221.8 | 241.4 |
| | 11 | 0.14 | 61.09 | 19.87 | 7.62 | - | 1.12 | 4.62 | 1.13 | 1.47 | 0.32 | 0.0045 | 0.002 | Bal. | 230.1 | 235.7 |
| | 12 | 0.13 | 57.61 | 19.22 | 7.13 | - | - | 6.03 | 1.60 | 1.59 | 0.33 | 0.0024 | 0.001 | Bal. | 262.4 | 254.2 |
| | 13 | 0.09 | 62.54 | 19.47 | 6.12 | 0.34 | 6.32 | 5.36 | 1.08 | 2.12 | 0.16 | 0.0018 | 0.002 | Bal. | 262.2 | 233.4 |
| | 14 | 0.19 | 63.04 | 22.85 | 7.04 | 5.75 | 0.56 | 5.12 | 1.42 | 1.58 | 0.34 | 0.0022 | 0.001 | Bal. | 261.2 | 258.9 |

The underlines indicate that they deviate from the specified values of the present invention.

In Table 1, "-" means that although trace amounts of elements below the lower analysis limits could be included, they were considered 0% for convenience.

Using each alloy powder, a 10 mm square block (10 mm × 10 mm × 10 mm) was prepared using a metal deposition type three-dimensional additive manufacturing apparatus and used as a test material.

Although the results are not shown, as a result of analyzing the additively manufactured article (test material) obtained by the additive manufacturing method using each alloy powder, the component composition of each additively manufactured article (test material) was the same as the component composition (see Table 1) of the corresponding alloy powder within an analytical error.

Each alloy powder can also be applied to a powder bed method. Thus, an additively manufactured article can also be prepared by a powder bed method. Examples using test pieces prepared by a metal deposition method will be exemplified below.

Table 2 shows D₅₀ of each alloy powder and the properties (tensile strength, number of cracks, relative density) of the additively manufactured article (test material) obtained using each alloy powder in Example Nos. 1 to 8 and Comparative Example Nos. 9 to 14. Methods for measuring D₅₀, tensile strength, number of cracks, and relative density will be described later.

### [Table 2]

**Table 2**

| | No. | D50 (µm) | Tensile strength (MPa) | Number of cracks | Relative density (%) |
|---|---|---|---|---|---|
| Example | 1 | 82.2 | 967 | 45 | 99.61 |
| | 2 | 79.4 | 1012 | 55 | 99.29 |
| | 3 | 79.0 | 1201 | 55 | 99.30 |
| | 4 | 66.7 | 979 | 55 | 99.13 |
| | 5 | 75.2 | 1053 | 49 | 99.46 |
| | 6 | 82.8 | 1006 | 52 | 99.32 |
| | 7 | 83.9 | 975 | 54 | 99.30 |
| | 8 | 65.9 | 1125 | 50 | 99.51 |
| Comparative Example | 9 | 84.0 | 700 | 38 | 99.90 |
| | 10 | 83.6 | 1070 | 88 | 97.82 |
| | 11 | 78.4 | 1117 | 85 | 97.99 |
| | 12 | 78.5 | 1300 | 98 | 97.28 |
| | 13 | 73.6 | 1299 | 83 | 98.09 |
| | 14 | 72.6 | 1293 | 103 | 97.05 |

### [Cracking Evaluation]

Using an optical microscope, the cross-section of a block was photographed in 5 views at × 100 for a test piece obtained by cutting each test material (10-mm square block) parallel to the shaping direction, and the number of cracks in the 5 images obtained was calculated by image analysis. The average value of cracks in the 5 images was taken as the number of cracks.

### [Evaluation of Relative Density]

The density (g/mm³) of each test material (10-mm square block) was calculated using Archimedean densitometry. In Archimedean densitometry, the density of the test material was calculated by dividing the weight of the test material in air by the volume of the test material (= weight of test material in water/density of water at a measurement temperature). The density (g/mm³) of the alloy powder was calculated by dry density measurement using a constant volume expansion method (gas used: helium gas; equipment used: Micromeritics AccuPyc1330 manufactured by SHIMADZU CORPORATION). The relative density (%) of the test material was calculated from the density of the test material and the density of the alloy powder based on the following formula: Relative density of test material (%) = Density of test material/Density of alloy powder × 100.

### [Tensile Test]

A JIS G0567 I-6 type test piece (ϕ6 × GL 30 mm) was prepared by cutting from each test material (10 mm square block). This test piece was subjected to a tensile test in an environment of 650°C, and the tensile strength was measured. The tensile test was performed according to JIS G0567.

### [Method for Measuring D₅₀]

In measuring the average particle size D₅₀ of each alloy powder, a cumulative curve is determined with the total powder volume taken as 100%. The particle size at the point on this curve where the cumulative volume is 50% is D₅₀. The particle diameter D₅₀ is determined by laser diffraction scattering. An example of an apparatus suitable for this measurement is NIKKISO CO., LTD.'s laser diffraction/scattering particle size distribution measuring apparatus, "Microtrac MT3000." The powder is poured into a cell of this apparatus together with pure water, and the particle size is detected based on the light scattering information of the particles.

### [X-Ray Diffraction (XRD)]

FIG. 1 shows the diffraction patterns resulting from XRD measurements of the additively manufactured articles (test materials) obtained using the alloy powders of Example 1 and Comparative Example 1. Comparing the additively manufactured articles of Example 1 and Comparative Example 1, it was found that the signal intensities of Laves and NbC observed in XRD of the additively manufactured article obtained using the alloy powder of Example 1 were weaker than those of the additively manufactured article obtained using the alloy powder of Comparative Example 1. This also confirmed that these phases, which cause solidification cracking, are suppressed in the present invention.

As shown in Table 2, compared to the Comparative Examples, the additively manufactured articles prepared using the Ni-based alloy powder of the present invention achieved both cracking resistance and high-temperature strength and showed excellent properties in cracking resistance and high-temperature strength (e.g., 950 MPa or more in the tensile test).

Meanwhile, the Nb content is excessively low in Comparative Example 9, thereby resulting in poor high-temperature strength.

The S content is excessively high in Comparative Example 10, thereby resulting in poor cracking resistance.

The B content is excessively high in Comparative Example 11, thereby resulting in poor cracking resistance.

The Al content is excessively high in Comparative Example 12, thereby resulting in poor cracking resistance.

The Ti content is excessively high in Comparative Example 13, thereby resulting in poor cracking resistance.

The C content is excessively high in Comparative Example 14, thereby resulting in poor cracking resistance.

### INDUSTRIAL APPLICABILITY

The Ni-based alloy powder of the present invention is suitable as a metal powder for additive manufacturing using a metal deposition method or a powder bed method.

## Claims

1. An Ni-based alloy powder consisting of, in mass%:
Ni: 40.00% to 70.00%;
Cr: 15.00% to 25.00%;
Mo: 0.10% to 12.00%;
Nb: 3.00% to 7.00%;
Al: 0.10% to 1.50%;
Ti: 0.10% to 2.00%;
Si: 0.01% to 0.40%;
C: 0.001% to 0.15%;
B: 0.0002% to 0.0040%;
S: 0% to 0.002%;
one or more of W and Co: 0% to 7.00% in total; and
the balance consisting of Fe and inevitable impurities,
wherein
a value of A1 defined by the following formula is 200 or more: A1 = 5.1[C] + 0.3[Cr] + 3.5[Mo] + 2.9[W] + 0.4[Co] + 19.0[Nb] + 9.4[Al] + 33.0[Ti] + 120.1[B] + 48.8
wherein [C], [Cr], [Mo], [W], [Co], [Nb], [Al], [Ti], and [B] represent contents of C, Cr, Mo, W, Co, Nb, Al, Ti, and B (mass%) in the Ni-based alloy powder, respectively, and
a value of A2 defined by the following formula is 200 or less: A2 = 270.4[C] + 0.5[Cr] + 0.6[Mo] + 0.3[W] + 0.1[Co] + 10.0[Nb] + 30.5[Al] + 15.8[Ti] + 2009.1[B] + 4094.3[S] + 62.1
wherein [C], [Cr], [Mo], [W], [Co], [Nb], [Al], [Ti], [B], and [S] represent contents of C, Cr, Mo, W, Co, Nb, Al, Ti, B, and S (mass%) in the Ni-based alloy powder, respectively.

2. An additively manufactured article obtained using the Ni-based alloy powder according to claim 1.
